# EUROPÄISCHE PATENTSCHRIFT

(11) **EP 0 995 650 B1**
(45) Veröffentlichungstag und Bekanntmachung des Hinweises auf die Patenterteilung: **11.08.2004**
(21) Anmeldenummer: 99120201.1
(22) Anmeldetag: 09.10.1999
(51) Int. Cl.: B60R 25/04

(54) **Vorrichtung und Verfahren zum Starten eines Kraftfahrzeugs**
Method and device for starting a vehicle
Dispositif et procédé pour le démarrage d'un véhicule

(30) Priorität: 21.10.1998 DE 19848375
(43) Veröffentlichungstag der Anmeldung: 26.04.2000
(73) Patentinhaber: Siemens Aktiengesellschaft, 80333 München (DE)
(72) Erfinder: Sievers, Christopher, 63452 Hanau (DE)

(56) Entgegenhaltungen:
- WO-A-95/13205
- DE-A- 4 429 418
- US-A- 5 376 935

## Beschreibung

Die Erfindung betrifft eine Vorrichtung und ein Verfahren zum Starten und/oder Stoppen eines Kraftfahrzeuges.

Bei der Vorrichtung ist eine Steuereinrichtung mit Eingängen versehen, die zum Anschluss eines im Fahrzeug angeordneten Identifikationsmoduls, eines die Schaltstellung eines Fahrzeuggetriebes signalisierenden Gebers, eines die Schließstellung einer Zentralverriegelung wiedergebenden Gebers sowie eines die Drehzahl des Motors des Kraftfahrzeugs anzeigenden Gebers dienen. Das Identifikationsmodul gibt bei erfolgreicher Identifikation eines Identifikationssignals ein Freigabesignal an die Steuereinrichtung ab. Ein im Fahrzeug befindlicher elektronischer Schlüssel ist dabei durch ein Anregungssignal zur Aussendung des Identifikationssignals anregbar.

Bei dem der Erfindung zugrunde liegenden Verfahren wird durch den Schlüssel beim Empfang des Anregungssignals das Identifikationssignal ausgesendet. Nach Identifikation des Schlüssels wird ein Freigabesignal für die Steuereinrichtung erzeugt.

Eine solchermaßen ausgestattete Steuereinrichtung sowie das Prinzip der Identifikation eines elektronischen Schlüssels über ein Identifikationsmodul mit anschließender Freigabe der Steuereinrichtung sind aus der WO-A-9513205 bekannt, welche eine Sicherungsvorrichtung zum Schutz von Kraftfahrzeugen gegen eine unbefugte Benutzung durch Dritte angibt.

Kraftfahrzeuge werden heute in zunehmendem Maße mit elektronischen Sicherungseinrichtungen versehen, um ihre Bedienung einfacher und komfortabler zu gestalten und um einen besseren Schutz gegen Diebstahl gewährleisten zu können.

Derartige Einrichtungen verwenden zumeist einen elektronischen Schlüssel, der bei Anregung durch ein vom Fahrzeug in regelmäßigen Abständen oder auf manuell gegebenen Befehl hin ausgesendetes Anregungssignal ein Identifikationssignal aussendet. Das Fahrzeug ist mit einer Empfangs- und Identifikationseinheit ausgerüstet, die das Fahrzeug bei Identifikation des Schlüssels freigibt.

Damit ist es möglich, beispielsweise die Zentralverriegelung zu öffnen, sobald sich der Besitzer des Schlüssels dem Fahrzeug nähert oder den Türgriff betätigt.

Bei den bisher gebräuchlichen Zündschlössern für Kraftfahrzeuge wird die Freigabe bislang noch mittels einer mechanischen Vorrichtung bewirkt. Das Zündschloss dient dabei zugleich als Schalter für die Stromversorgung des Kraftfahrzeuges. Ferner weisen derartige mechanische Zündschlösser in der Regel mehrere Schaltstellungen zum Einschalten des Radios, diverser kleinerer Stromverbraucher, sowie der Hauptstromversorgung des Kraftfahrzeuges und zum Anlassen des Motors auf. Aufgrund dieser vielfältigen Anforderungen ist ein mechanisches Zündschloss aufwendig und teuer.

Aufgabe der vorliegenden Erfindung ist es, eine Vorrichtung und ein Verfahren anzugeben, welche das Starten eines Kraftfahrzeuges mittels eines elektronischen Schlüssels ermöglicht. Sie soll preiswert und einfach herstellbar sein und ohne mechanisch arbeitendes Zündschloss auskommen. Die Vorrichtung soll einfach bedienbar sein und den Vorschriften der Straßenverkehrsordnung genügen.

Diese Aufgabe wird bei der erfindungsgemäßen Vorrichtung dadurch gelöst, dass die Steuereinrichtung mit einem im Fahrzeug angeordneten Bedienschalter zur Betätigung der Steuereinrichtung verbunden ist und dass die Steuereinrichtung Schaltausgänge zur Schaltung einer Hauptstromversorgung des Kraftfahrzeugs und eines Motoranlassers aufweist.

Das erfindungsgemäße Verfahren löst die Aufgabe dadurch, dass zum Starten des Motors nach Betätigen des Bedienschalters das Anregungssignal an den Schlüssel ausgesendet wird und dass nach Empfang des Freigabesignals durch die Steuereinrichtung die Hauptstromversorgung des Fahrzeugs aktiviert wird.

Die Benutzung eines mit einer erfindungsgemäßen Startvorrichtung ausgestatteten Kraftfahrzeugs ist denkbar einfach. Der Benutzer betätigt zum Ein- und Ausschalten der Stromversorgung und zum Starten und Ausschalten des Motors des Kraftfahrzeugs lediglich den Bedienschalter. Alle übrigen notwendigen Schaltvorgänge werden von dem Steuergerät automatisch vorgenommen, sofern der Benutzer einen gültigen Schlüssel bei sich hat. Ein kompliziertes mechanisches Zündschloß kann auf diese Weise entfallen.

Auch die bis dahin zum Schutz vor Diebstählen vorgeschriebene Lenkradsperre erübrigt sich, falls das Fahrzeug mit einer alternativen Sicherungseinrichtung ausgestattet ist. Als Beispiel sei hier die elektronisch gesteuerte Verriegelung des Schaltknüppels des Getriebes in der Parkstellung bzw. in Rückwärtsstellung genannt. In diesem Fall ist das Einstellen der entsprechenden Getriebestellung vor dem Abstellen des Motors erforderlich. Mit der erfindungsgemäßen Vorrichtung können die gesetzlichen Vorschriften bezüglich des Diebstahlschutzes und der Sicherheit von Kraftfahrzeugen eingehalten werden.

Der Motor des Kraftfahrzeugs darf nur angelassen werden, wenn das Getriebe kein Moment überträgt, da ansonsten das Fahrzeug beim Anlassen sofort losfahren würde. Darum benötigt die Steuereinrichtung eine Information über die Schaltstellung des Getriebes und gegebenenfalls der Kupplung. Unter der Schaltstellung des Getriebes wird hier verstanden, welcher Gang eingelegt ist. Bei einem Automatikgetriebe ist darunter die mit dem Schalthebel angewählte Stellung zu verstehen.

Es besteht ferner die Möglichkeit zur Behandlung von Fehlfunktionen der Steuereinrichtung, daß im Fahrzeug ein Notabschalter zur Deaktivierung der Steuereinrichtung vorgesehen ist. Dadurch ist gewährleistet, daß die Sterereinrichtung bei Fehlfunktionen abgeschaltet werden kann. So ist der Notabschalter zu bedienen, falls sich der Motor des Kraftfahrzeugs aufgrund einer Fehlfunktion nicht abstellen läßt. Im Falle eines hängenden oder sich in den laufenden Motor einklinkenden Anlassers kann der Steuereinrichtung ebenfalls durch den Notabschalter die Kontrolle entzogen werden. Der Notabschalter kann zur einfachen Bedienung in den Bedienschalter für die Steuereinrichtung integriert werden.

Bei einer ersten Ausgestaltung der Erfindung ist vorgesehen, daß der Bedienschalter ein Wipptaster ist. Alternativ dazu können auch zwei nahe beieinander liegende Taster oder ein Taster zur Bedienung der Steuereinrichtung vorgesehen sein.

Um das Radio des Kraftfahrzeugs getrennt vom Motor oder der Hauptstromversorgung einschalten zu können, ist bei einer weiteren Ausgestaltung der Erfindung vorgesehen, daß die Steuereinrichtung einen Schaltausgang zur Schaltung der Stromversorgung des Radios des Kraftfahrzeugs aufweist. Verfahren zur Bedienung und zum Betrieb der erfindungsgemäßen Vorrichtung sind in Neben- und Unteransprüchen näher ausgeführt.

Ausführungsbeispiele der Erfindung sind in der Zeichnung anhand mehrerer Figuren dargestellt und in der nachfolgenden Beschreibung näher erläutert. Es zeigt:
- Fig. 1: das Steuergerät einer erfindungsgemäßen Vorrichtung,
- Fig. 2: ein Verfahren zur Verarbeitung der dem Steuergerät zugeführten Signale bei Verwendung eines Tasters als Bedienschalter und
- Fig. 3: dasselbe Verfahren bei Verwendung eines Tasters als Bedienschalter.

Gleiche Teile sind in den Figuren mit gleichen Bezugszeichen versehen.

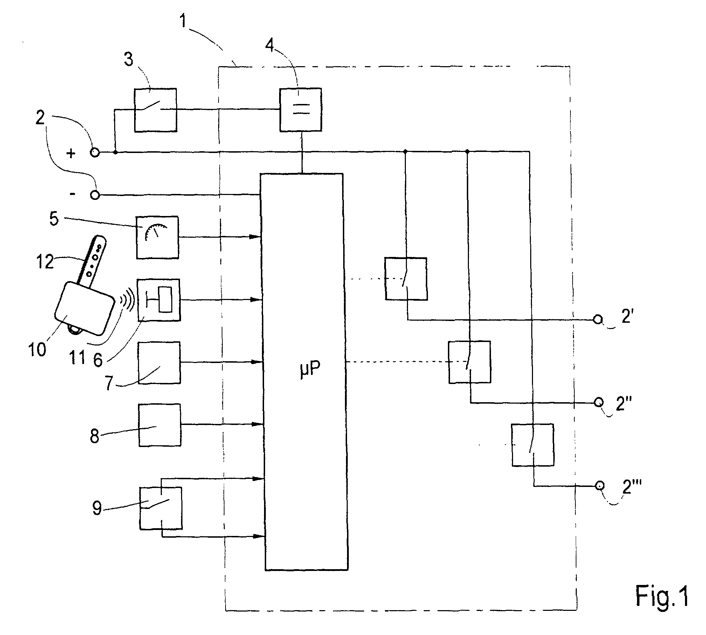

Fig. 1 zeigt das Steuergerät 1 einer erfindungsgemäßen Vorrichtung, die in ein nicht dargestelltes Kraftfahrzeug eingebaut ist. Das Steuergerät 1 verfügt über Anschlußklemmen 2 zum Anschluß an das Bordstromnetz des Kraftfahrzeugs sowie über einen Schaltausgang 2' zur Schaltung der Hauptstromversorgung des Kraftfahrzeugs, einen Schaltausgang 2'' für die Stromversorgung des Radios sowie einen Schaltausgang 2''', über welchen der Anlasser des Kraftfahrzeugs betätigbar ist. Mit einem Notabschalter 3 läßt sich die Stromversorgung des Steuergerätes, die über ein Netzteil 4 erfolgt, abschalten. Die Schaltausgänge 2' bis 2''' fallen dabei in einen unkritischen Zustand.

In gängigen elektrischen Schaltplänen für Kraftfahrzeuge entspricht der Schaltausgang 2' der Klemme 15. Der Schaltausgang 2''' entspricht der Klemme 50. Die Anschlüsse 2 zur Verbindung des Steuergerätes mit dem Bordstromnetz des Kraftfahrzeugs entsprechen den Klemmen 30 und 31.

Das Steuergerät 1 ist mit Eingängen versehen zum Anschluß eines Drehzahlgebers 5, eines Identifikationsmoduls 6 des kraftfahrzeuginternen Sicherheitssystems, eines Gebers 7, welcher die Schaltstellung des Fahrzeuggetriebes bzw. der Parkbremse signalisiert, eines Gebers 8, welcher über die Schließstellung der Zentralverriegelung Auskunft gibt, sowie eines Wipptasters 9, welcher beispielsweise am Schaltknauf des Fahrzeuggetriebes angeordnet ist. Das Steuergerät verfügt über einen Mikroprozessor (µ P), welcher zur Auswertung der eingehenden Signale und zur Auslösung der Schaltvorgänge programmierbar ist.

Bei Betätigung des Wippschalters durch den Benutzer des Kraftfahrzeugs wird ein elektronischer Schlüssel 10 zum Aussenden eines Identifikationssignals 11 angeregt. Das Identifikationsmodul 6 empfängt das Signal des Schlüssels 10 und gibt ein Freigabesignal an das Steuergerät ab, falls das Identifikationssignal erkannt wurde. Das Steuergerät wertet die sonstigen ihm zur Verfügung stehenden Signale aus und schaltet entsprechend eines vorgegebenen Programms die Stromausgänge 2' bis 2'''. Auf diese Weise läßt sich die gesamte Stromversorgung des Kraftfahrzeugs mittels des Wipptasters steuern; ein mechanisches Zündschloß kann ganz entfallen. Der Schlüssel 10 kann jedoch zur Betätigung diverser anderer Fahrzeugschlösser mit einem mechanischen Schlüsselteil 12 ausgerüstet sein.

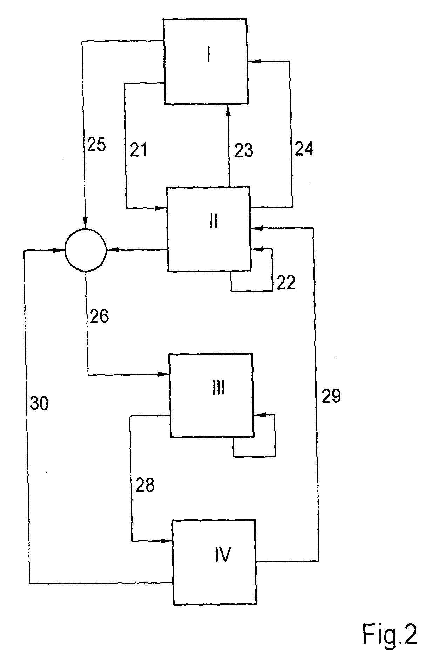

Fig. 2 zeigt nach welchem Verfahren das Steuergerät die Schaltausgänge 2' bis 2''' in Abhängigkeit der eingehenden Signale schaltet, wenn der Bedienschalter ein einfacher Taster ist. Die Diagramme sind in der Art von Zustandsdiagrammen organisiert. Die eckigen Felder symbolisieren jeweils einen Zustand, während auf den Ablaufwegen zwischen den Feldern Aktionen in Abhängigkeit von Bedingungen stattfinden. Durch diese Aktionen gelangt man von einem Zustand in Pfeilrichtung zu einem nächsten.

Das eckige Feld I symbolisiert den Ruhezustand, in dem die Schaltausgänge 2' bis 2''' stromlos sind. Im Zustand II ist der Schaltausgang 2'' zur Versorgung des Radios eingeschaltet (Bereitschaftszustand). Ferner wird ein rückwärts laufender Zähler auf einen vorgebbaren positiven Wert eingestellt und gestartet. Im Zustand III (Anlaßzustand) sind die Schaltausgänge 2' und 2'' eingeschaltet. Der Schaltausgang 2''' wird kurze Zeit nach dem Erreichen des Zustandes III automatisch ebenfalls eingeschaltet (Anlassen des Fahrzeugmotors). Schließlich symbolisiert Feld IV den Betriebszustand, in dem sowohl der Schaltausgang 2'' als auch der Schaltausgang 2' mit Spannung beaufschlagt sind. Das Fahrzeug ist anschließend ganz normal zu bedienen.

Im folgenden wird jeder Ablaufweg einzeln erklärt. Dabei wird jeweils ein Auslöser angegeben, bei dessen Auftreten der Mikroprozessor µP des Steuergerätes den entsprechenden Ablaufweg wählt. Anschließend werden Bedingungen aufgeführt, bei deren Erfülltsein die Aktionen ausgeführt werden. Werden die Bedingungen nicht erfüllt, so verharrt das Steuergerät in dem vorherigen Zustand oder wählt, falls dies möglich ist, einen alternativen Weg, falls dieser ausgelöst wird. Die einzelnen Ablaufwege sind:
Ablaufweg 21
   Auslöser: Die Zentralverriegelung 8 wird geöffnet und ein Freigabesignal ist erfolgt; Bedingungen: keine; Aktionen: Schaltausgang 2'' wird mit Spannung versorgt und der Zähler gesetzt und gestartet.
Ablaufweg 22
   Auslöser: Keiner, dieser Weg wird ständig durchlaufen; Bedingungen: Der Zählerstand unterschreitet einen vorgegebenen Zwischenwert; Aktionen: Ein weiteres Freigabesignal wird vom Identifikationsmodul 6 angefordert. Wenn daraufhin das Freigabesignal erfolgt, wird der Zähler neu gesetzt.
Ablaufweg 23
   Auslöser: Der Zähler ist abgelaufen; Bedingungen: Keine; Aktionen: Alle Schaltausgänge (2', 2'', 2''') werden wieder spannungslos geschaltet.
Ablaufweg 24
   Auslöser: Zentralverriegelung wird geschlossen; Bedingungen: keine; Aktionen: Schaltausgang 2'' wird abgeschaltet.
Ablaufweg 25
   Auslöser: Keiner; Bedingungen: Keine, der Weg wird immer durchlaufen; Aktionen: Keine Aktion erfolgt.
Ablaufweg 26
   Auslöser: Der Taster wird bedient; Bedingungen: Der Motor ist aus, das Freigabesignal ist erneut erfolgt und das Getriebe befindet sich in Park- oder Neutralstellung; Aktionen: Die Schaltausgänge 2' und 2'' und nach kurzer Zeitverzögerung auch 2''' werden mit Spannung beaufschlagt.
Ablaufweg 27
   Auslöser: Der Benutzer hält den Taster gedrückt; Bedingungen: Keine, wird endlos durchlaufen; Aktionen: Der Schaltausgang 2''' bleibt mit Spannung beaufschlagt.
Ablaufweg 28
   Auslöser: Der Taster wird wieder losgelassen; Bedingungen: Keine; Aktionen: Der Schaltausgang 2''' wird abgeschaltet.
Ablaufweg 29
   Auslöser: Der Taster wird erneut gedrückt; Bedingungen: Das Getriebe befindet sich in Park- oder Neutralstellung und die Schaltausgänge 2' und 2'' sind mit Spannung beaufschlagt; Aktionen: Der Schaltausgang 2' wird abgeschaltet und der Zähler wird gesetzt.
Ablaufweg 30
   Auslöser: Keiner, wird immer durchlaufen; Bedingungen: Keine; Aktionen: Keine, führt erneut zu Ablaufweg 26.

Damit ergibt sich folgende Funktionalität des Steuergerätes in Verbindung mit dem Bedientaster:

Sobald die Zentralverriegelung des Kraftfahrzeugs geöffnet wird, wird das Steuergerät aktiviert und das Freigabesignal wird automatisch angefordert. Im folgenden Schritt wird das Radio betriebsbereit gemacht und die Hauptstromversorgung des Kraftfahrzeugs aktiviert. Aus Stromspar- und Sicherheitsgründen wird ein Timer aktiviert. Falls dieser Timer abläuft, ohne daß ein weiteres Freigabesignal empfangen wurde, schaltet das Steuergerät alle Schaltausgänge, das Radio und die Hauptstromversorgung ab, sofern das Fahrzeug steht. Unbefugte Personen, denen es gelungen ist, in das Fahrzeug einzudringen, können auf diese Weise nicht starten bzw. losfahren. Während der Fahrt wird diese Funktion unterdrückt.

Bei Betätigen des Tasters wird der Motor automatisch angelassen und das Fahrzeug ist betriebsbereit. Bei nochmaligem Betätigen des Tasters wird der Motor, falls das Fahrzeug steht, wieder abgestellt; das Radio bleibt weiter aktiviert, bis der Benutzer mit dem Schlüssel aussteigt.

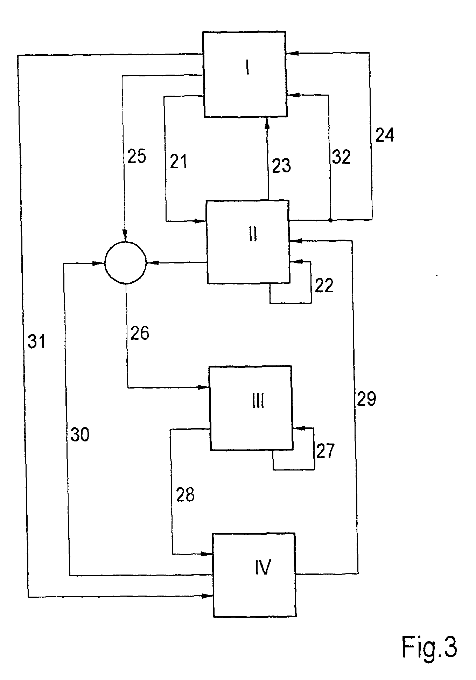

Fig. 3 zeigt nach welchem Verfahren das Steuergerät die Schaltausgänge 2' bis 2''' in Abhängigkeit der eingehenden Signale schaltet, wenn statt eines einfachen Tasters ein Wipptaster 9 mit zwei Schaltstellungen als Bedienschalter eingesetzt wird. Die Zustände I bis IV entsprechen denjenigen, die im Zusammenhang mit Fig. 2 erläutert sind.

Die Abläufe auf den Wegen 21 bis 30 sind mit denen in Fig. 2 identisch. Bei Ablaufweg 26 ist der Wipptaster 9 vom Benutzer in eine erste Schaltstellung, die Startstellung, gebracht worden. Bei 27 wird diese Position gehalten. Bei 29 bringt der Benutzer den Wipptaster 9 in eine zweite Schaltstellung, die Stoppstellung.

Zusätzlich schlägt das Steuergerät ausgehend vom Ruhezustand I den Weg 31 ein, falls die Stoppstellung betätigt wird und falls der Motor aus ist und das Freigabesignal erfolgt ist. Die Schaltausgänge 2' und 2'' werden dann mit Spannung beaufschlagt.

Falls der Motor aus ist und der Schaltausgang 2'' mit Spannung beaufschlagt ist, nimmt das Steuergerät den Ablaufweg 32, sobald die Stoppstellung betätigt wird. Der Schaltausgang 2' wird dann abgeschaltet.

Damit ergibt sich neben der Funktionalität nach Fig. 2 die Möglichkeit, die Hauptstromversorgung gleich nach dem Einsteigen einzuschalten, ohne daß der Motor gestartet wird, indem man den Wippschalter in die Stoppstellung bewegt. Ebenso kann diese durch ein wiederholtes Betätigen der Stoppstellung wieder separat abgestellt werden.

Bei beiden Ausführungsbeispielen ist es somit möglich, das Kraftfahrzeug lediglich durch Drücken des Bedienschalters zu starten oder abzustellen, sofern der Benutzer einen gültigen Schlüssel mit sich führt. Ein mechanisches Zündschloß entfällt ganz. Der Benutzer muß bei der Bedienung des Fahrzeugs ferner nicht mehr mit dem Zündschlüssel hantieren.

## Patentansprüche

1. Vorrichtung zum Starten und/oder Stoppen eines Kraftfahrzeugs mit einer Steuereinrichtung (1), welche mit Eingängen versehen ist zum Anschluss von
- einem im Fahrzeug angeordneten Idehtifikationsmodul (6),
- einem die Schaltstellung eines Fahrzeuggetriebes signalisierenden Geber (7),
- einem die Schließstellung einer Zentralverriegelung wiedergebenden Geber (8) und
- einem die Drehzahl des Motors des Kraftfahrzeugs anzeigenden Geber (5),
wobei das Identifikationsmodul (6) bei erfolgreicher Identifikation eines Identifikationssignals (11) ein Freigabesignal an die Steuereinrichtung (1) abgibt und
wobei ein im Fahrzeug befindlicher elektronischer Schlüssel (10) durch ein Anregungssignal zur Aussendung des Identifikationssignals (11) anregbar ist, **dadurch gekennzeichnet, dass** die Steuereinrichtung (1) mit einem im Fahrzeug angeordneten Bedienschalter zur Betätigung der Steuereinrichtung (1) verbunden ist und dass die Steuereinrichtung (1) Schaltausgänge (2', 2''') zur Schaltung einer Hauptstromversorgung des Kraftfahrzeugs und eines Motoranlassers aufweist.

2. Vorrichtung nach Anspruch 1, **dadurch gekennzeichnet, daß** im Fahrzeug ein Notabschalter (3) zur Deaktivierung der Steuereinrichtung (1) vorgesehen ist.

3. Vorrichtung nach Anspruch 1, **dadurch gekennzeichnet, daß** der Bedienschalter ein Wipptaster (9) ist.

4. Vorrichtung nach Anspruch 1, **dadurch gekennzeichnet, daß** der Bedienschalter aus zwei nahe beieinander liegenden Tastern besteht.

5. Vorrichtung nach Anspruch 1, **dadurch gekennzeichnet, daß** der Bedienschalter ein Taster ist.

6. Vorrichtung nach Anspruch 1, **dadurch gekennzeichnet, daß** die Steuereinrichtung einen Schaltausgang (2'') zur Schaltung der Stromversorgung des Radios des Kraftfahrzeugs aufweist.

7. Verfahren zum Starten und/oder Stoppen des Motors eines Kraftfahrzeugs mittels einer Vorrichtung nach einem der vorhergehenden Ansprüche, bei dem durch den Schlüssel (10) beim Empfang des Anregungssignals das Identifikationssignal (11) ausgesendet wird und bei dem nach Identifikation des Schlüssels ein Freigabesignal für die Steuereinrichtung erzeugt wird, **dadurch gekennzeichnet, dass** zum Starten des Motors nach Betätigen des Bedienschalters das Anregungssignal ausgesendet wird und dass nach Empfang des Freigabesignals die Hauptstromversorgung des Fahrzeugs aktiviert wird.

8. Verfahren nach Anspruch 7, **dadurch gekennzeichnet, dass** der Schlüssel (10) zyklisch zum Aussenden des Identifikationssignals (11) angeregt wird und dass bei Ausbleiben des richtigen Identifikationssignals (11) die Hauptstromversorgung abgeschaltet wird.

9. Verfahren nach einem der Ansprüche 7 oder 8, **dadurch gekennzeichnet, dass** beim Starten die Hauptstromversorgung nur aktiviert wird, sofern der Motor ausgeschaltet ist und sich das Getriebe in Parkoder Neutralstellung befindet und dass anschließend nach Verstreichen einer vorgegebenen Zeitdauer der Anlasser des Motors betätigt wird.

10. Verfahren nach einem der Ansprüche 7 bis 9, **dadurch gekennzeichnet, dass** beim Stoppen nach Betätigen des Bedienschalters die Hauptstromversorgung nur abgeschaltet wird, sofern der Motor läuft und sich das Getriebe in Park- oder Neutralstellung befindet bzw. sofern der Rückwärtsgang eingelegt ist.

11. Verfahren nach einem der Ansprüche 7 bis 10 mit einem Wipptaster nach Anspruch 3, **dadurch gekennzeichnet, dass** zum Starten der Bedienschalter in einer ersten Schaltstellung, der Startstellung, betätigt wird und dass zum Stoppen der Bedienschalter in einer zweiten Schaltstellung, der Stoppstellung, betätigt wird.

12. Verfahren nach Anspruch 11, **dadurch gekennzeichnet, dass** nach Betätigen des Wipptasters in der Stoppstellung die Hauptstromversorgung angeschaltet wird, sofern der Motor aus ist und das Freigabesignal erfolgt ist, und dass bei erneutem Betätigen des Bedienschalters die Hauptstromversorgung abgeschaltet wird.

13. Verfahren nach einem der Ansprüche 7 bis 10 mit einem Taster nach Anspruch 5, **dadurch gekennzeichnet, dass** zum Starten der Taster einmalig betätigt wird und dass zum Stoppen der Taster erneut betätigt wird.

14. Verfahren nach einem der Ansprüche 7 bis 13 mit einem Schaltausgang (2'') nach Anspruch 6, **dadurch gekennzeichnet, dass** nach erfolgtem Freigabesignal die Versorgung des Radios angeschaltet wird und dass nach Betätigen des Bedienschalters zum Stoppen nur die Hauptstromversorgung abgeschaltet wird.

15. Verfahren nach Anspruch 14, **dadurch gekennzeichnet, dass** die Versorgung des Radios nach drittmaligem Betätigen des Bedienschalters abgeschaltet wird.

16. Verfahren nach Anspruch 14, **dadurch gekennzeichnet, dass** die Versorgung des Radios nach dem Schließen der Zentralverriegelung abgeschaltet wird.

## Claims

1. Device for starting and/or stopping a motor vehicle having a control device (1) which is provided with inputs for connecting
- an identification module (6) which is arranged in the vehicle,
- a sensor (7) which signals the gear shift position of a vehicle gearbox,
- a sensor (8) which represents the locked position of a central locking system, and
- a sensor (5) which indicates the rotational speed of the engine of the motor vehicle,
the identification module (6) outputting an enable signal to the control device (1) when an identification signal (11) is successfully identified, and an electronic key (10) which is located in the vehicle being capable of being excited by means of an excitation signal in order to emit the identification signal (11), **characterized in that** the control device (1) is connected to an operator control switch, arranged in the vehicle, for activating the control device (1), and **in that** the control device (1) has switching outputs (2', 2''') for switching a main power supply of the motor vehicle and of an engine starter.

2. Device according to Claim 1, **characterized in that** an emergency deactivation switch (3) for deactivating the control device (1) is provided in the vehicle.

3. Device according to Claim 1, **characterized in that** the operator control switch is a rocker switch (9).

4. Device according to Claim 1, **characterized in that** the operator control switch is composed of two momentary-contact control switches which are located one next to the other.

5. Device according to Claim 1, **characterized in that** the operator control switch is a momentary-contact control switch.

6. Device according to Claim 1, **characterized in that** the control device has a switching output (2'') for switching the power supply of the radio of the motor vehicle.

7. Method for starting and/or stopping the engine of a motor vehicle by means of a device according to one of the preceding claims, in which the identification signal (11) is emitted by the key (10) when the excitation signal is received, and in which an enable signal for the control device is generated after the key has been identified, **characterized in that**, after the operator control switch has been activated, the excitation signal is emitted in order to start the engine, and **in that** the main power supply of the vehicle is activated after the enable signal has been received.

8. Method according to Claim 7, **characterized in that** the key (10) is excited cyclically in order to emit the identification signal (11), and **in that** the main power supply is switched off when the correct identification signal (11) fails to occur.

9. Method according to one of Claims 7 or 8, **characterized in that**, when the engine is started, the main power supply is activated only if the engine is switched off and the gearbox is in the parked position or neutral position, and **in that** the starter of the engine is then activated after a predefined time period has expired.

10. Method according to one of Claims 7 to 9, **characterized in that**, when the engine stops, the main power supply is switched off after the operator control switch has been activated only if the engine is running and the gearbox is in the parked position or neutral position or if the reverse gear has been selected.

11. Method according to one of Claims 7 to 10 having a rocker switch according to Claim 3, **characterized in that**, in order to start, the operator control switch is activated in a first switched position, the starting position, and **in that**, in order to stop, the operator control switch is activated in a second switched position, the stop position.

12. Method according to Claim 11, **characterized in that**, after the rocker switch has been activated in the stop position, the main power supply is switched on if the engine is off and the enable signal has occurred, and **in that** the main power supply is switched off when the operator control switch is activated again.

13. Method according to one of Claims 7 to 10 having a momentary-contact control switch according to Claim 5, **characterized in that** the momentary-contact control switch is activated once in order to start, and the momentary-contact control switch is activated again in order to stop.

14. Method according to one of Claims 7 to 13, having a switching output (2'') according to Claim 6, **characterized in that**, after the enable signal has occurred, the supply to the radio is switched on, and **in that** only the main power supply is switched off after the operator control switch has been activated in order to stop.

15. Method according to Claim 14, **characterized in that** the supply to the radio is switched off after the operator control switch has been activated a third time.

16. Method according to Claim 14, **characterized in that** the supply to the radio is switched off after the central locking system has been locked.

## Revendications

1. Dispositif pour démarrer et/ou pour arrêter un véhicule automobile avec un dispositif de commande (1), qui est muni d'entrées, permettant de raccorder :
- un module d'identification (6), disposé dans le véhicule,
- un capteur (7) signalant la position de commutation d'une boîte de vitesses du véhicule,
- un capteur (8) restituant la position de fermeture d'un verrouillage centralisé et
- un capteur (5) indiquant la vitesse de rotation du moteur du véhicule automobile,
après identification réussie d'un signal d'identification (11), le module d'identification (6) délivrant un signal de validation au dispositif de commande (1) et une clé électronique (10) située dans le véhicule pouvant être excitée par un signal d'excitation pour émettre un signal d'identification (11), **caractérisé en ce que** le dispositif de commande (1) est relié avec un commutateur de service placé dans le véhicule pour actionner le dispositif de commande (1) et **en ce que** le dispositif de commande (1) est muni de sorties de commutation (2', 2''') pour commuter une alimentation électrique principale du véhicule et un démarreur du moteur.

2. Dispositif selon la revendication 1, **caractérisé en ce qu'**un arrêt d'urgence (3) est prévu dans le véhicule pour la désactivation du dispositif de commande (1).

3. Dispositif selon la revendication 1, **caractérisé en ce que** le commutateur de service est une touche basculante (9).

4. Dispositif selon la revendication 1, **caractérisé en ce que** le commutateur de service est constitué de deux touches proches l'une de l'autre.

5. Dispositif selon la revendication 1, **caractérisé en ce que** le commutateur de service est une touche.

6. Dispositif selon la revendication 1, **caractérisé en ce que** le dispositif de commande est muni d'une sortie de commutation (2") pour commuter l'alimentation électrique de la radio du véhicule automobile.

7. Procédé pour démarrer et/ou arrêter le moteur d'un véhicule automobile à l'aide d'un dispositif selon l'une quelconque des revendications précédentes, dans lequel le signal d'identification (11) est émis par la clé (10) à réception du signal d'excitation et dans lequel, après identification de la clé, un signal de validation est généré pour le dispositif de commande, **caractérisé en ce que** pour démarrer le moteur, le signal d'excitation est émis après actionnement du commutateur de service et après réception du signal de validation, l'alimentation électrique principale du véhicule est activée.

8. Procédé selon la revendication 7, **caractérisé en ce que** la clé (10) est excitée cycliquement pour émettre le signal d'identification (11) et si le signal d'identification correct (11) fait défaut, l'alimentation électrique principale est coupée.

9. Procédé selon l'une quelconque des revendications 7 ou 8, **caractérisé en ce que** lors du démarrage, l'alimentation électrique principale n'est activée que si le moteur est coupé et si la boîte de vitesse se trouve en position de stationnement ou au point mort et **en ce qu'**ensuite, après écoulement d'une période prédéfinie, le démarreur du moteur est actionné.

10. Procédé selon l'une quelconque des revendications 7 à 9, **caractérisé en ce que** lors de l'arrêt, après actionnement du commutateur de service, l'alimentation électrique principale n'est coupée que si le moteur tourne et si la boîte de vitesses se trouve en position de stationnement ou au point mort, resp. si la marche arrière est enclenchée.

11. Procédé selon l'une quelconque des revendications 7 à 10, avec une touche basculante selon la revendication 3, **caractérisé en ce que** pour démarrer, le commutateur de service est d'abord actionné dans une première position de commutation, la position de démarrage, et pour arrêter, le commutateur de service est actionné dans une seconde position de commutation , la position d'arrêt.

12. Procédé selon la revendication 11, **caractérisé en ce qu'**après actionnement de la touche basculante dans la position d'arrêt, l'alimentation électrique principale est enclenchée, dans la mesure où le moteur est éteint et si le signal de validation a été donné et qu'en cas d'actionnement renouvelé du commutateur de service, l'alimentation électrique principale est coupée.

13. Procédé selon l'une quelconque des revendications 7 à 10, avec une touche selon la revendication 5, **caractérisé en ce que** la touche est actionnée une fois pour le démarrage et qu'elle est actionnée une nouvelle fois pour l'arrêt.

14. Procédé selon l'une quelconque des revendications 7 à 13, avec une sortie de commutation (2") selon la revendication 6, **caractérisé en ce qu'**après délivrance du signal de validation, l'alimentation de la radio est enclenchée et seule l'alimentation électrique principale est coupée après actionnement du commutateur de service pour l'arrêt.

15. Procédé selon la revendication 14, **caractérisé en ce que** l'alimentation de la radio est coupée après le troisième actionnement du commutateur de service.

16. Procédé selon la revendication 14, **caractérise en ce que** l'alimentation de la radio est coupée après la fermeture du verrouillage centralisé.
